# EUROPÄISCHE PATENTANMELDUNG

(11) **EP 4 454 909 A1**
(43) Veröffentlichungstag der Anmeldung: **30.10.2024**
(21) Anmeldenummer: 24172121.6
(22) Anmeldetag: 24.04.2024
(51) Int. Cl.: B60H 1/34, F16H 37/12

(54) **KINEMATISCHES BAUTEIL**

(30) Priorität: 27.04.2023 DE 202023102298 U
(71) Anmelder: GRAMMER AG, 92289 Ursensollen (DE)
(72) Erfinder: Grüdl, Alexander, 86358 Teuschnitz (DE)
(74) Vertreter: Hannke, Christian

(57) **Zusammenfassung**

Die Erfindung betrifft ein kinematisches Bauteil (1) mit einem ersten beweglich einstellbaren Bauteil (2), einem zweiten beweglich einstellbaren Bauteil (3) und einer Vorrichtung (4), welche einen drehbaren Aktuator (8) aufweist, wobei die Vorrichtung (4) dazu vorgesehen und ausgebildet ist, eine Drehbewegung des Aktuators (8) an die beweglich einstellbaren Bauteile (2, 3) zu übertragen, wobei in einer ersten Drehrichtung (DR1) des Aktuators (8) das erste beweglich einstellbare Bauteil (2) und in einer zweiten Drehrichtung (DR2) des Aktuators (8), welche der ersten Drehrichtung (DR1) entgegengesetzt ist, das zweite beweglich einstellbare Bauteil (3) einstellbar ist.

## Beschreibung

Die vorliegende Gebrauchsmusteranmeldung betrifft ein kinematisches Bauteil mit einem ersten und einem zweiten beweglich einstellbaren Bauteil.

Aus dem Stand der Technik sind beispielsweise kinematische Bauteile wie z.B. Ausströmern, Scheinwerfer und dergleichen bekannt, die sich zum Teil selbst referenzieren können, sobald sie einen Endanschlag erkennen. Wird anschließend ein zweiter Endanschlag abgefahren, können iterativ dazwischen liegende Positionen angefahren werden, da der antreibende Aktuator nun die Grenzen kennt und durch Schrittzählung Zwischenpositionen anfahren kann. Man kennt dies beispielsweise von Scheinwerfern mit Kurvenlicht, die beim Anlassen des Fahrzeugs zunächst eine Links-Rechts-Bewegung durchführen. Indem diese Aktuatoren dann die vollzogenen Schritte während einer Bewegung zählen, wissen die Aktuatoren, an welcher Position sie sich befinden und demzufolge auch, welche Stellung die betätigten Bauteile haben, beispielsweise Winkel einer Lamelle zur Luftablenkung, Richtung des Lichtkegels bei Scheinwerfern etc.

Schwierig wird es für derartige Aktuatoren, wenn keine Endanschläge vorgesehen sind, wie beispielsweise bei endlos drehenden Bewegungen. Verliert der Aktuator seine vorab hinterlegte Referenz, beispielsweise durch auftretende Fehler oder Stromausfall, so kennt das System die tatsächliche Stellung der Einzelteile nicht mehr. Es ist dann wichtig, in regelmäßigen Abständen die Stellung abzufragen und so die Referenz neu zu erfassen. Sodann können erneut die Schritte mitgezählt werden, um die gewünschten Stellungen anfahren zu können. Ein von dem Aktuator bewegtes Bauteil betätigt mittels einer Nocke oder eines Pins einen Sensor, sobald das Bauteil eine bestimmte Position/ Stellung erreicht. So wird eine Referenzierung erfasst und der Aktuator kennt nun seine Position. Hat man mehrere Aktuatoren, ist für jeden ein Sensor erforderlich.

Es ist daher die Aufgabe der vorliegenden Anmeldung, ein kinematisches Bauteil mit einer Vorrichtung bereitzustellen, mittels welchen die Anzahl an Aktuatoren verringert werden kann.

Gelöst wird die zugrunde liegende Aufgabe durch ein kinematisches Bauteil mit den Merkmalen des Schutzanspruches 1.

Erfindungsgemäß ist es ein Kerngedanke der vorliegenden Anmeldung, ein kinematisches Bauteil mit einem ersten beweglich einstellbaren Bauteil, einem zweiten beweglich einstellbaren Bauteil und einer Vorrichtung (4), welche einen drehbaren Aktuator aufweist, bereitzustellen, wobei bevorzugt die Vorrichtung dazu vorgesehen und ausgebildet ist, eine Drehbewegung des Aktuators an die beweglich einstellbaren Bauteile zu übertragen, wobei in einer ersten Drehrichtung des Aktuators das erste beweglich einstellbare Bauteil und in einer zweiten Drehrichtung des Aktuators, welche der ersten Drehrichtung entgegengesetzt ist, das zweite beweglich einstellbare Bauteil einstellbar ist.

Unter einem kinematischen Bauteil ist ein Bauteil zu verstehen, welches mehrere bewegliche Bauteile umfasst, mittels welchen eine dem Bauteil zugeordnete Funktion eingestellt werden kann. Rein beispielhaft und nicht abschließend könnte ein derartiges Bauteil ein Luftausströmer (auch bekannt als Lüftungsdüse) mit mehreren Lamellen, ein Scheinwerfer oder dergleichen sein.

Ein beweglich einstellbares Bauteil kann derart verstanden werden, dass durch die beweglich einstellbaren Bauteile, die dem kinematischen Bauteil zugeordnete Funktion verändert bzw. eingestellt werden kann. Beim Beispiel des Luftausströmers können die beweglich einstellbaren Bauteile die Lamellen sein, welche den Luftstrom entsprechend ablenken können.

Ein drehbarer Aktuator ist gemäß einer bevorzugten Ausführungsform einfach realisiert, wenn der drehbare Aktuator ein Elektromotor ist. Dieser kann bereits zwei entgegengesetzte Drehrichtungen aufweisen bzw. bereitstellen. Grundsätzlich sind aber auch andere Aktuatoren denkbar, welche dazu vorgesehen und ausgebildet sind, zumindest zwei entgegengesetzte Drehrichtungen zu ermöglichen bzw. aufzuweisen.

Gemäß einer weiteren besonders bevorzugten Ausführungsform ist es vorgesehen, dass die Vorrichtung weiter eine Antriebseinheit umfasst. Die Antriebseinheit kann mit dem ersten beweglich einstellbaren Bauteil und dem zweiten beweglich einstellbaren Bauteil derart verbunden sein, dass durch eine Betätigung der Antriebseinheit das erste beweglich einstellbare Bauteil und/oder das zweite beweglich einstellbare Bauteil betätigt werden können.

Weiter bevorzugt kann die Antriebseinheit durch den Aktuator betätigt werden und/oder den Aktuator aufweisen. Besonders bevorzugt ist der Aktuator derart ausgebildet, dass dieser eine erste Drehrichtung und eine zweite Drehrichtung aufweisen kann. Weiter bevorzugt kann es vorgesehen sein, dass bei Vorliegen der ersten Drehrichtung das erste beweglich einstellbare Bauteil und bei Vorliegen der zweiten Drehrichtung das zweite beweglich einstellbare Bauteil betätigt werden können. Hierdurch ist es möglich, die beweglich einstellbaren Bauteile drehrichtungsabhängig bzw. in Abhängigkeit von der jeweiligen Drehrichtung und folglich unabhängig voneinander zu betätigen.

Entsprechend bevorzugt ist die Antriebseinheit derart ausgebildet und vorgesehen, dass bei Vorliegen der ersten Drehrichtung das erste beweglich einstellbare Bauteil und bei Vorliegen der zweiten Drehrichtung das zweite beweglich einstellbare Bauteil betätigt werden können.

Besonders bevorzugt sind die erste Drehrichtung und die zweite Drehrichtung entgegengesetzt zueinander.

Gemäß einer weiteren bevorzugten Ausführungsform kann es vorgesehen sein, dass die Vorrichtung ein erstes Betätigungselement und ein zweites Betätigungselement aufweist, wobei bevorzugt das erste Betätigungselement mit der Antriebseinheit und dem ersten beweglich einstellbaren Bauteil und das zweite Betätigungselement mit der Antriebseinheit und dem zweiten beweglich einstellbaren Bauteil verbunden ist.

Hierdurch kann es möglich sein, durch das Vorsehen dieser Betätigungselemente die Übertragung vom Aktuator über die Antriebseinheit zu den beweglich einstellbaren Bauteilen kompakter auszugestalten, da die jeweiligen Bauteile in einer platzsparenden Art und Weise miteinander verbunden werden können. Weiter bevorzugt stehen die Betätigungselemente mit der Sensoreinheit, bevorzugter mit dem Betätigungselement bzw. dem Sensor, in Wirkkontakt.

Gemäß einer weiteren bevorzugten Ausführungsform ist die Vorrichtung frei von Endanschlägen. Hierdurch ist es möglich, unerwünschte Anschläge von Bauteilen zu vermeiden, was zu Beschädigungen führen kann. Bevorzugt kann es vorgesehen sein, dass die Antriebseinheit derart ausgebildet ist, dass sowohl für das erste beweglich einstellbare Bauteil als auch für das zweite beweglich einstellbare Bauteil eine endlos drehende Bewegung ermöglicht ist.

Besonders bevorzugt ist es vorgesehen, dass hinsichtlich des ersten beweglich einstellbaren Bauteils eine endlos drehende Bewegung in einer ersten Drehrichtung und hinsichtlich des zweiten beweglich einstellbaren Bauteils eine endlos drehende Bewegung in einer zweiten Drehrichtung, welche der ersten Drehrichtung entgegengesetzt ist, möglich ist.

Gemäß einer weiteren bevorzugten Ausführungsform kann es vorgesehen sein, dass die Antriebseinheit ein erstes Zahnradelement und ein zweites Zahnradelement aufweist. Weiter bevorzugt ist das erste Zahnradelement drehbar um eine erste Drehachse und das zweite Zahnradelement drehbar um eine zweite Drehachse. Durch das Vorsehen von Zahnradelementen bzw. Zahnrädern können Drehbewegungen besonders gut und sicher übertragen werden.

Das erste Zahnradelement und das zweite Zahnradelement stehen miteinander in Wirkverbindung, das heißt, dass Zähne der Zahnradelemente ineinandergreifen und daher die Zahnradelemente miteinander wechselwirken können.

Besonders einfach können Bewegungen übertragen werden, wenn die erste Drehachse und die zweite Drehachse im Wesentlichen parallel zueinander ausgebildet sind. Im Wesentlichen bedeutet, dass Toleranzen aufgrund des Einbaus bzw. Aufbaus berücksichtigt werden müssen, was zu geringen Abweichungen von der Parallelität führen kann.

Gemäß einer bevorzugten Ausführungsform kann es vorgesehen sein, dass der Aktuator direkt oder indirekt mit den Zahnradelementen verbunden ist. Es kann beispielsweise denkbar sein, dass der Aktuator direkt mit dem ersten Zahnradelement oder dem zweiten Zahnradelement verbunden ist und dieses direkt antreibt. Alternativ kann es vorgesehen sein, dass ein Antriebszahnradelement vorgesehen ist, welches mit dem Aktuator verbunden ist und mit dem ersten Zahnradelement oder dem zweiten Zahnradelement wirkverbunden ist, so dass der Aktuator indirekt die Zahnradelemente antreibt. Durch die Anordnung des Aktuators mit den Zahnradelementen ist nur ein Aktuator notwendig, die entsprechenden beweglich einstellbaren Bauteile zu bewegen.

Gemäß einer weiteren bevorzugten Ausführungsform kann es vorgesehen sein, dass das erste Betätigungselement drehbar um eine vierte Drehachse ist, wobei ein erstes Verbindungselement vorgesehen ist, welches mit dem ersten Zahnradelement und dem ersten Betätigungselement verbunden ist. Besonders bevorzugt ist die vierte Drehachse senkrecht oder in einem Winkel zu der ersten bzw. zweiten Drehachse angeordnet. Dadurch kann es möglich sein, platzsparend die entsprechenden Bauteile anzuordnen.

Gemäß einer weiteren bevorzugten Ausführungsform kann es vorgesehen sein, dass das erste Betätigungselement ein erstes Stiftelement und das erste Verbindungselement eine erste Führungskulisse aufweist, wobei das erste Stiftelement in die erste Führungskulisse eingreift. Durch die erste Führungskulisse kann bei einer Bewegung das erste Stiftelement entsprechend geführt werden, wodurch die Bewegung dann an das erste beweglich einstellbare Bauteil übertragen werden kann.

Gemäß einer weiteren bevorzugten Ausführungsform kann es vorgesehen sein, dass das zweite Betätigungselement ein zweites Stiftelement und ein zweites Verbindungselement mit einer zweiten Führungskulisse aufweist, wobei das zweite Stiftelement in die zweite Führungskulisse eingreift. Durch die zweite Führungskulisse kann bei einer Bewegung das zweite Stiftelement entsprechend geführt werden, wodurch die Bewegung dann an das zweite beweglich einstellbare Bauteil übertragen werden kann.

Gemäß einer weiteren bevorzugten Ausführungsform kann es vorgesehen sein, dass das erste Verbindungselement mit dem ersten Zahnrad durch ein erstes Freilaufelement verbunden ist. Gemäß einer weiteren bevorzugten Ausführungsform kann es vorgesehen sein, dass das zweite Verbindungselement mit dem zweiten Zahnrad durch ein zweites Freilaufelement verbunden ist.

Durch das Vorsehen von Freilaufelementen kann die jeweilige Drehbewegung übertragen oder eben nicht übertragen werden.

Die Freilaufelemente sind bevorzugt derart ausgebildet und dazu vorgesehen, die Elemente nur in einer Drehrichtung miteinander zu koppeln, so dass eine Drehbewegung des Zahnrads an das entsprechende Verbindungselement übertragen werden kann. Dies bedeutet, dass in der jeweils entgegengesetzte Drehrichtung die entsprechenden Elemente nicht miteinander verbunden sind, so dass eine Drehbewegung eben nicht übertragen werden kann. Hierdurch kann die unabhängige Betätigung der beweglich einstellbaren Bauteile weiter ausgebildet werden.

Das Freilaufelement kann demnach als eine nur in einer Drehrichtung wirkende Kupplung angesehen werden.

Die Freilaufelemente können auf verschiedenster Art und Weise ausgebildet sein. Rein beispielhaft und nicht abschließend, können die Freilaufelemente zumindest eines aus folgenden Beispielen sein: ein auf magnetische Weise arbeitender Freilauf, ein Freilauf mit Klemmrollen, ein Freilauf mit Sperrklinke(n), ein Federwickel-Freilauf, ein Freilauf-Dämpfer, ein Hülsen-Freilauf oder eine beliebige Kombination der vorhergehenden.

Weiterführende Ausgestaltungen und Ausbildungen in den Ausführungsformen untereinander sind auf die weiteren Ausführungen anwendbar und sind untereinander frei kombinierbar, sofern sie nicht gegenläufigen Ausführungsformen entsprechen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen.

Die Erfindung wird nachfolgend in Zusammenhang mit den Figuren näher dargestellt.

Es zeigen:
- Fig. 1A: ein kinematisches Bauteil gemäß einer Ausführungsform in einer perspektivischen Ansicht von vorne,
- Fig. 1B: das kinematische Bauteil gemäß Figur 1A in einer perspektivischen Ansicht von hinten;
- Fig. 1C: ein Ausschnitt der Figur 1A;
- Fig. 1D: ein Ausschnitt der Figur 1B;
- Fig. 2A: die Figur 1D in einer perspektivischen Ansicht von unten;
- Fig. 2B: einen Ausschnitt der Figur 2A;
- Fig. 2C: einen Ausschnitt der Figur 1C;
- Fig. 2D: einen Ausschnitt der Figur 2A;
- Fig. 2E: Einen Ausschnitt der Figur 2A;
- Fig. 2F: einen Ausschnitt der Figur 2A;
- Fig. 3A: eine weitere Ausführungsform eines Ausschnitts des kinematischen Bauteils in einer perspektivischen Ansicht von vorne;
- Fig. 3B: die Figur 3A in einer perspektivischen Ansicht von oben und hinten;
- Fig. 3C: die Figur 3A in einer perspektivischen Ansicht von unten;
- Fig. 3D: einen Ausschnitt der Figur 3A;
- Fig. 3E: einen Ausschnitt der Figur 3C;
- Fig. 4A: die Figur 1C in einer Draufsicht;
- Fig. 4B: der Schnitt A-A der Figur 4A;
- Fig. 4C: der Schnitt B-B der Figur 4A;
- Fig. 5A: eine Draufsicht der Figur 3B;
- Fig. 5B: der Schnitt C-C der Figur 5A;
- Fig. 5C: der Schnitt D-D der Figur 5A;
- Fig. 6: eine Ausführungsform der Antriebeinheit.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

Die nachfolgenden Figuren sind exemplarisch für ein kinematisches Bauteil 1 dargestellt, welches als ein Luftausströmer ausgebildet ist. Die Ausführungen, Ausgestaltungen und dergleichen sind aber ebenfalls auf weitere kinematische Bauteile in analoger Art und Weise übertragbar. Die gezeigten Beispiele dienen der Erklärung und der Funktionsweise und sind nicht abschließend oder einschränkend auf das kinematische Bauteil 1 zu verstehen.

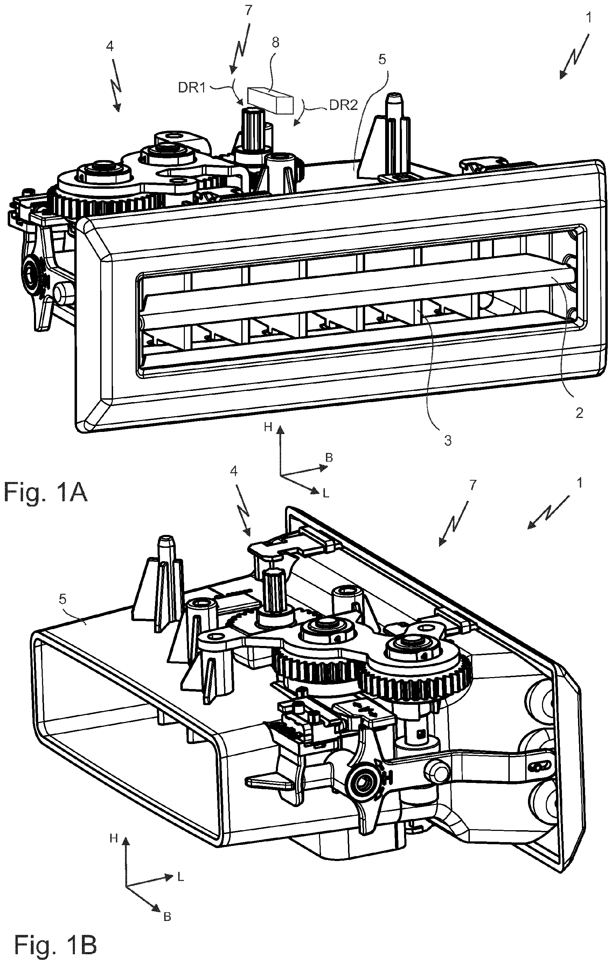

In der Figur 1A ist exemplarisch ein kinematisches Bauteil 1 in einer perspektivischen Ansicht von vorne dargestellt, welches bevorzugt ein Luftausströmer ist. Das kinematische Bauteil 1 umfasst ein erstes beweglich einstellbares Bauteil 2, dargestellt durch waagerecht verlaufende Lamellen, und ein zweites beweglich einstellbares Bauteil 3, dargestellt durch senkrecht verlaufende Lamellen.

Das kinematische Bauteil 1 weist ein erstes beweglich einstellbares Bauteil 2, ein zweites beweglich einstellbares Bauteil 3 und eine Vorrichtung 4, welche einen drehbaren Aktuator 8 aufweist, wobei die Vorrichtung 4 dazu vorgesehen und ausgebildet ist, eine Drehbewegung des Aktuators 8 an die beweglich einstellbaren Bauteile 2, 3 zu übertragen, wobei in einer ersten Drehrichtung DR1 des Aktuators 8 das erste beweglich einstellbare Bauteil 2 und in einer zweiten Drehrichtung DR2 des Aktuators 8, welche der ersten Drehrichtung DR1 entgegengesetzt ist, das zweite beweglich einstellbare Bauteil 3 einstellbar ist.

Weiter ist die Vorrichtung 4 dargestellt, welche dazu vorgesehen und ausgebildet ist, die beweglich einstellbaren Bauteile 2, 3 unabhängig voneinander einzustellen. Bevorzugt umfasst die Vorrichtung 4 eine Antriebseinheit 7, welche mit einem drehbaren Aktuator 8 einerseits und mit dem ersten beweglich einstellbaren Bauteil 2 und dem zweiten beweglich einstellbaren Bauteil 3 andererseits verbunden ist, wobei bevorzugt die Antriebseinheit 7 mittels des Aktuators 8 betätigt werden kann und in einer ersten Drehrichtung DR1 des Aktuators 7 das erste beweglich einstellbare Bauteil 2 und in einer zweiten Drehrichtung DR2, welche der ersten Drehrichtung DR1 entgegengesetzt ist, das zweite beweglich einstellbare Bauteil 3 einstellbar ist.

In der Figur 1B ist das kinematische Bauteil 1 der Figur 1A in einer perspektivischen Ansicht von hinten dargestellt.

Allgemein kann das kinematische Bauteil 1 in einem weiteren Teil eingebaut sein, beispielsweise in einem Innenraum eines Fahrzeugs, oder dergleichen.

Durch eine Betätigung der beweglich einstellbaren Bauteile 2, 3, in der vorliegenden Ausführung, ist es möglich, einen Luftstrom, welcher durch den Luftkanal 6 geführt ist, entsprechend ablenken zu können.

Das erste beweglich einstellbare Bauteil 2 lenkt den Luftstrom in einer Höhenrichtung H nach oben und unten ab und das zweite beweglich einstellbare Bauteil 3 lenkt den Luftstrom in einer Breitenrichtung B nach links und rechts ab.

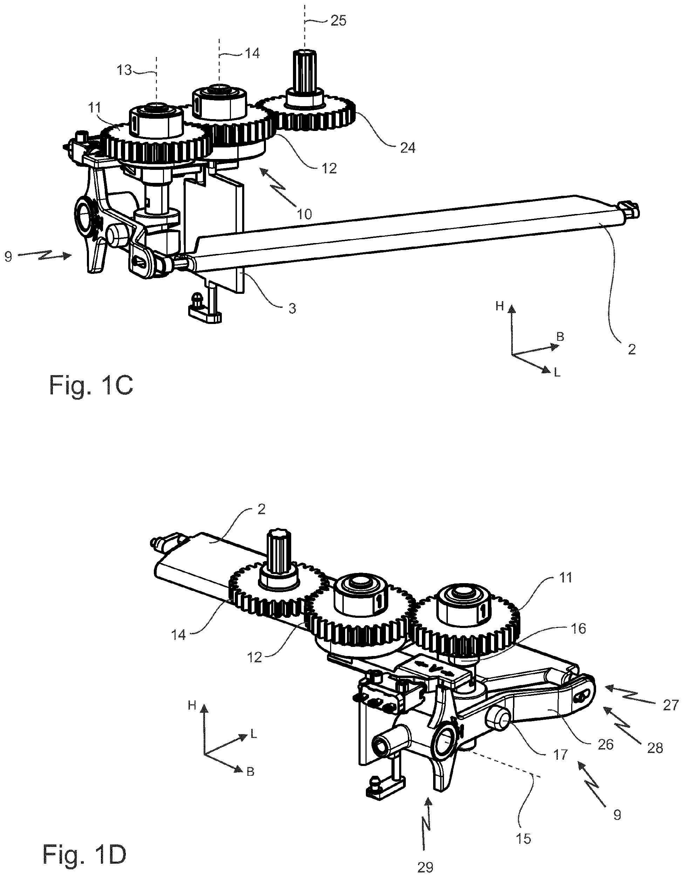

In der Figur 1C ist die Ausführung gemäß Figur 1A nochmals dargestellt, wobei manche Bauteile weggelassen worden sind. In der Figur 1D ist die Ausführung gemäß Figur 1B nochmals dargestellt, wobei manche Bauteile weggelassen worden sind.

Anhand der Figuren 1A bis 1D kann die Antriebseinheit 7 näher dargestellt werden, in einer ersten Ausführungsform.

Gemäß einer bevorzugten Ausführungsform kann es vorgesehen sein, dass die Antriebseinheit 7 ein erstes Zahnradelement 11, welches um eine erste Drehachse 13 drehbar ist, und ein zweites Zahnradelement 12, welches drehbar um eine zweite Drehachse 14 ist, aufweist.

Bevorzugt steht die Antriebseinheit 7 mit einem ersten Betätigungselement 9 und mit einem zweiten Betätigungselement 10 in Wirkkontakt. Das erste Betätigungselement 9 steht einerseits mit der Antriebseinheit 7 in Verbindung und andererseits mit dem ersten beweglich einstellbaren Bauteil 2. Das zweite Betätigungselement 10 steht einerseits mit der Antriebseinheit 7 in Verbindung und andererseits mit dem zweiten beweglich einstellbaren Bauteil 3.

Weiter bevorzugt kann der Aktuator 8 direkt oder indirekt mit der Antriebseinheit 7 zumindest wirkverbunden sein. Eine indirekte Verbindung ist gemäß den Figuren 1C und 1D dadurch dargestellt, dass ein Antriebszahnradelement 24, welches drehbar um eine dritte Drehachse 25 ist, vorgesehen ist. Bevorzugt steht das Antriebszahnradelement 24 mit dem ersten Zahnradelement 11 oder dem zweiten Zahnradelement 12 in Kontakt, so dass sich eine Drehung des Antriebszahnradelement 24 auf die weiteren Zahnradelemente 11, 12 übertragen lässt. Das Antriebszahnradelement 24 kann auch mit dem ersten Zahnradelement 11 und dem zweiten Zahnradelement 12 in Kontakt stehen, sodass das Antriebszahnradelement 24 beide Zahnradelemente 11, 12 antreibt.

Alternativ, als direkte Verbindung gesehen, kann es auch vorgesehen sein, dass der Aktuator 8 direkt das erste Zahnradelement 11 oder das zweite Zahnradelement 12 antreibt.

Besonders bevorzugt sind die erste Drehachse 13 und die zweite Drehachse 14 parallel zueinander angeordnet, weiter bevorzugt sind die erste Drehachse 13 und die zweite Drehachse 14 zueinander parallel und parallel zu der Höhenrichtung H. Die dritte Drehachse 25 ist vorliegend parallel zu den Drehachsen 13, 14, kann aber auch alternativ senkrecht oder in einem anderen Winkel zu diesen Drehachsen 13, 14 ausgebildet sein, wodurch beispielsweise die Zahnradelemente 11, 12 als Kegelräder ausgeführt sein können. Grundsätzlich kann die Drehmomentübertragung über bekannte Zahnradgeometrien, Riemengetriebe, Reibräder, o.ä. ausgebildet sein.

Die Betätigungselemente 9, 10 sowie deren Verbindung mit der Antriebseinheit 7 bzw. den Zahnrädern 11, 12 der Antriebseinheit 7 wird in den weiteren Figuren näher dargestellt.

Das erste Betätigungselement 9 ist drehbar um eine vierte Drehachse 15 angeordnet. Bevorzugt ist die vierte Drehachse 15 hinsichtlich des kinematischen Bauteils 1 ortsfest ausgebildet, das heißt, dass die vierte Drehachse 15 ihre Position hinsichtlich des kinematischen Bauteils 1 nicht verändert. Dazu kann das erste Betätigungselement 9 an einem Gehäuse, an dem Luftkanal 5 oder dergleichen angeordnet sein.

Weiter bevorzugt steht das erste Betätigungselement 9 mit dem ersten beweglich einstellbaren Bauteil 2 in Verbindung, und zwar derart, dass durch Bewegungen des ersten Betätigungselements 9 das erste beweglich einstellbare Bauteil 2 ebenso betätigt wird. Dazu weist bevorzugt das erste Betätigungselement 9 ein Hebelelement 26 auf, welches sich bevorzugt in einer Längsrichtung L streckt. Ein erstes Ende 27 steht mit dem ersten beweglich einstellbaren Bauteil 2, beispielsweise mittels einer Schlitz-Zapfen-Verbindung 28 und ein Drehpunkt des Hebelelements 25, beispielsweise das zweite Ende 29, mit der vierten Drehachse 15 in Verbindung. Der Drehpunkt des Hebelelements 26 kann hinsichtlich des Hebelelements 26 bevorzugt an einer beliebigen Stelle angeordnet sein.

Bevorzugt ist ein erstes Stiftelement 17 vorgesehen, welches sich bevorzugt von dem Hebelelement 26 bzw. dem ersten Betätigungselement 9 weg erstreckt, beispielsweise in der Breitenrichtung B oder in einem Winkel dazu. Bevorzugt ist das erste Stiftelement 17 fest mit dem ersten Betätigungselement 9 verbunden. Weiter bevorzugt ist das erste Stiftelement 17 in Längsrichtung L gesehen zwischen der vierten Drehachse 15 bzw. dem zweiten Ende 29 und dem ersten Ende 27 angeordnet. Alternativ kann das Stiftelement 17 auch an einer anderen Stelle des Hebelelements 26 angeordnet sein. So kann es sein, dass die vierte Drehachse 15 zwischen dem ersten Stiftelement 17 und dem ersten Ende 27 angeordnet ist. Dies bedeutet, dass das erste Ende 27 und das erste Stiftelement 17 auf gegenüberliegenden Seiten hinsichtlich der vierten Drehachse 15 auf dem Hebelelement 26 angeordnet sind. Bevorzugt steht das erste Stiftelement 17 mit einer ersten Führungskulisse 18 (hier nicht gezeigt) in Verbindung. Bevorzugt erstreckt sich das erste Stiftelement 17 entlang einer Breitenrichtung B.

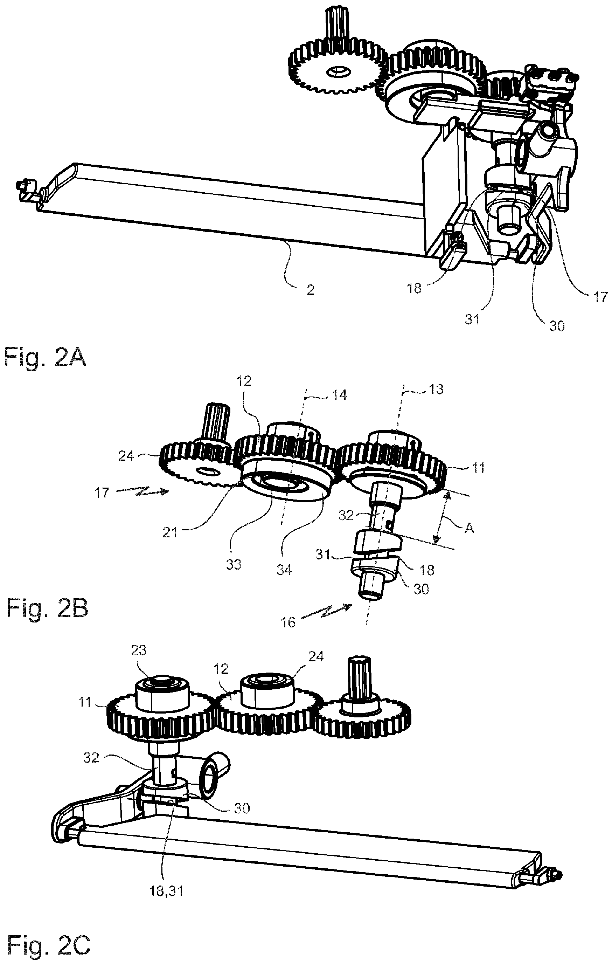

In der Figur 2A ist eine derartige Verbindung näher dargestellt. Die erste Führungskulisse 18 ist derart, dass ein zylinderförmiges Bauteil 30 vorgesehen ist mit einer Einkerbung 31, welche die erste Führungskulisse 18 ausbildet. Dabei ist die Einkerbung 31 derart, dass diese am gesamten zylinderförmige Bauteil 30 in Umfangsrichtung angeordnet ist und in sich geschlossen ist, das heißt, kein Ende aufweist, wodurch eine endlos drehende Bewegung möglich ist. Die Einkerbung 31 ist wellen- und/oder stufenförmig und/oder helixförmig und/oder wendelförmig zu bzw. in der Höhenrichtung H verlaufend, so dass eine Bewegung nach oben und nach unten des ersten beweglich einstellbaren Bauteils 2 ermöglicht wird, da das erste Stiftelement 17 dieser ersten Führungskulisse 18 folgt, die Bewegung an das erste Betätigungselement 9 überträgt und diese Bewegung wiederum auf das erste beweglich einstellbare Bauteil 2.

Eine andere Darstellung kann auch der Figur 2B entnommen werden. Das zylinderförmige Bauteil 30 ist dabei mit dem ersten Zahnradelement 11 derart verbunden, dass bei Drehung des ersten Zahnradelements 11 das zylinderförmige Bauteil 30 in eine Drehrichtung DR1, DR2 eine entsprechende Drehung erfährt und bei einer Drehung in die entgegengesetzte Drehrichtung DR1, DR2 keine Drehung erfährt. Bevorzugt ist dies mittels eines Freilaufelements 22, 23 gelöst. Bevorzugt ist das zylinderförmige Bauteil 30 in einem Abstand A in Höhenrichtung H von dem ersten Zahnradelement 11 beabstandet, was bevorzugt mittels eines ersten Verbindungselements 32 möglich ist. Das erste Verbindungselement 32 ist einerseits mit dem ersten Zahnradelement 11 in der beschriebenen Weise und andererseits mit dem zylinderförmigen Bauteil 30 verbunden. Eine weitere Darstellung kann der Figur 2C entnommen werden.

Der Figur 2B kann darüber hinaus hinsichtlich des zweiten Zahnradelements 12 eine weitere Führung mittels einer zweiten Führungskulisse 21 entnommen werden. Bei der zweiten Führungskulisse 21 handelt es sich um eine Einkerbung 33 in einem weiteren zylinderförmigen Bauteil 34, welches bevorzugt unterhalb des zweiten Zahnradelements 12 angeordnet ist, das heißt, dass das zylinderförmige Bauteil 34 in Höhenrichtung H unterhalb des zweiten Zahnrads 12 angeordnet ist.

Besonders bevorzugt handelt es sich bei der Einkerbung 33 bzw. bei der zweiten Führungskulisse 21 um einen Kreisring, welcher bevorzugt exzentrisch zu der zweiten Drehachse 14 angeordnet ist. Alternativ ist die zweite Führungskulisse 21 ovalförmig, herzförmig, oder dergleichen ausgebildet, wobei die angegebenen Ausführungsformen lediglich als Beispiele gedacht sind. Grundsätzlich kann jede mögliche Form für die zweite Führungskulisse 21 vorgesehen sein, welche ein Verschieben eines zweiten Stiftelements 20 in der Breitenrichtung B erlaubt. Ebenso ist die zweite Führungskulisse 21 derart ausgebildet, dass das zweite Stiftelement 20 ohne Verhaken oder Blockieren geführt werden kann. Bevorzugt kann die zweite Führungskulisse 21 exzentrisch hinsichtlich der Drehachse 14 angeordnet sein. Die Eigenschaften der zweiten Führungskulisse 21 sind auch auf weitere Kulissen übertragbar und vorsehbar.

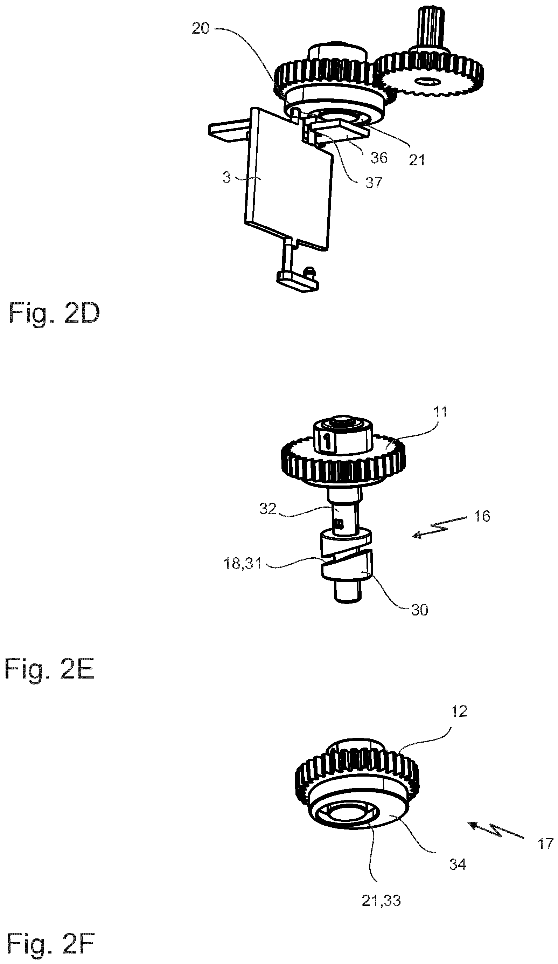

In die zweite Führungskulisse 21 kann ebenso das zweite Stiftelement 20 eingreifen, welcher durch die bewegte zweite Führungskulisse 21 bewegt werden kann und entsprechend dann die Bewegung auf das zweite beweglich einstellbare Bauteil 3 übertragen kann. Das zweite Stiftelement 20 ist beispielsweise in der Figur 2D dargestellt. Wie weiter zu erkennen ist, ist das zweite Stiftelement 20 direkt oder indirekt mit dem zweiten beweglich einstellbaren Bauteil 3 verbunden.

Weiter kann ein Schiebeelement 36 vorgesehen sein, welches bevorzugt das zweite Stiftelement 20 umfasst. Bevorzugt ist das Schiebeelement 36 derart ausgebildet, dass es durch die Drehbewegung der zweiten Führungskulisse 21 bzw. der Bewegung des zweiten Stiftelements 20 linear verschiebbar ist, bevorzugt in Richtung der Breitenrichtung B. Besonders bevorzugt weist das Schiebeelement 36 eine Aufnahme 37 auf, in welche das zweite beweglich einstellbare Bauteil 3 eingreift und dadurch entsprechend mit der Bewegung des Schiebeelements 36 bewegt werden kann.

Gemäß einer besonders bevorzugten Ausführungsform kann es vorgesehen sein, dass das erste Zahnradelement 11 und das zylinderförmige Bauteil 30 bzw. das erste Verbindungselement 16 mittels eines ersten Freilaufelements 22 miteinander verbunden sind. Weiter bevorzugt ist das zweite Zahnradelement 13 und das zweite Verbindungselement 17 bzw. das zylinderförmige Bauteil 34 mittels eines zweiten Freilaufelements 23 miteinander verbunden. Die Freilaufelemente 22, 23 sind bevorzugt derart ausgebildet und dazu vorgesehen, die Elemente nur in einer Drehrichtung DR1, DR2 miteinander zu koppeln, so dass eine Drehbewegung der Zahnradelemente 11, 12 an das weitere Element übertragen werden kann. Dies bedeutet, dass in der jeweils entgegengesetzte Drehrichtung DR1, DR2 die entsprechenden Elemente nicht miteinander verbunden sind, so dass eine Drehbewegung eben nicht übertragen werden kann. Hierdurch kann die unabhängige Betätigung der beweglich einstellbaren Bauteile 2, 3 weiter ausgebildet werden.

Das Freilaufelement 22, 23 kann demnach als eine nur in einer Drehrichtung DR1, DR2 wirkende Kupplung angesehen werden.

Die Freilaufelemente 22, 23 können auf verschiedenste Art und Weise ausgebildet sein. Rein beispielhaft und nicht abschließend können die Freilaufelemente 22, 23 zumindest eines aus folgenden Beispielen sein: ein auf magnetische Weise arbeitender Freilauf, ein Freilauf mit Klemmrollen, ein Freilauf mit Sperrklinke(n), ein Federwickel-Freilauf, ein Freilauf-Dämpfer, ein Hülsen-Freilauf, oder eine beliebige Kombination der vorhergehenden.

In den Figuren 2E und 2F sind die Verbindungselemente 16, 17 der Figuren 2A-2D einzeln dargestellt.

Anstelle des zylinderförmigen Bauteils 30, mittels welchem das erste Betätigungselement 9 betätigt werden kann, kann es gemäß einer alternativen Ausführungsform vorgesehen sein, dass das erste Verbindungselement 16 als ein viertes Zahnradelement 39 vorgesehen ist, welches um eine fünfte Drehachse 40 drehbar ist, wodurch mittels des vierten Zahnradelements 39 das erste Betätigungselement 9 betätigt werden kann.

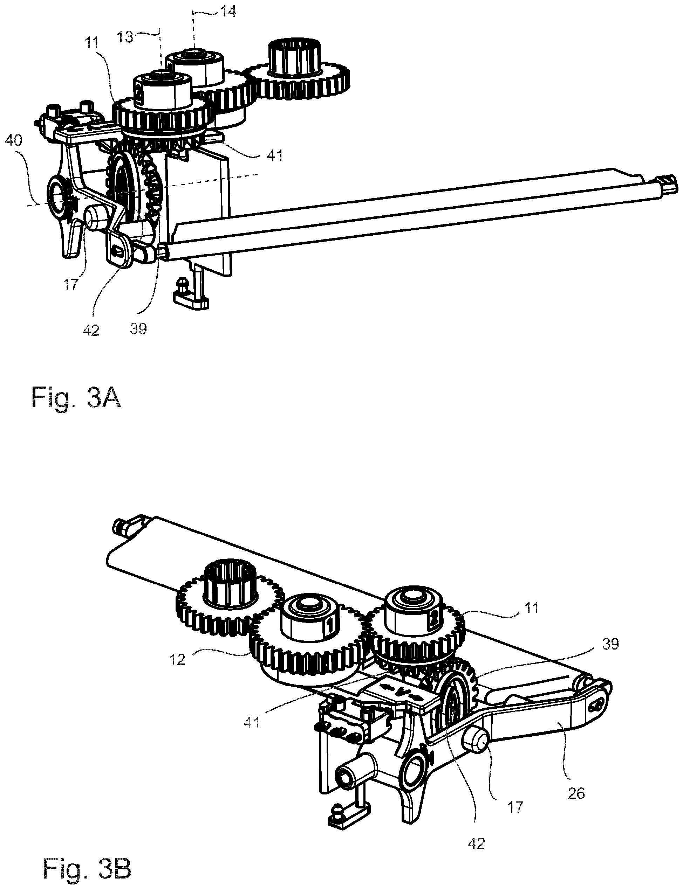

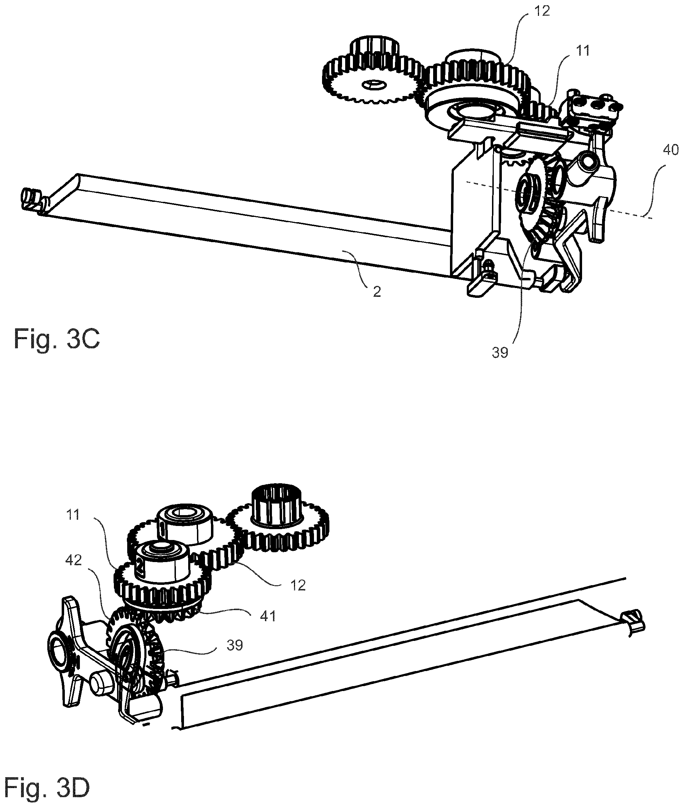

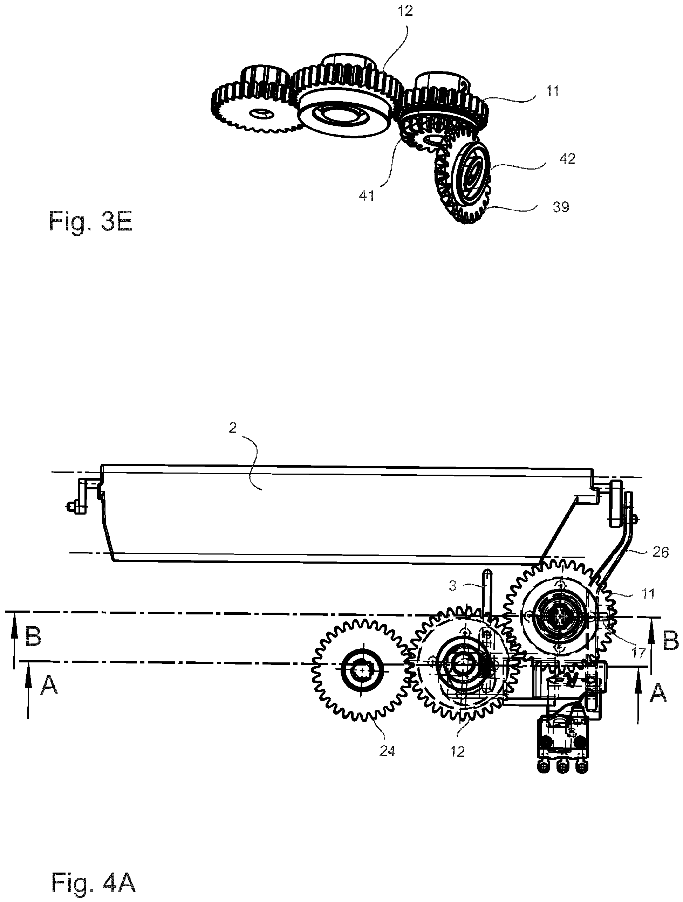

Diese Ausführungsform ist beispielsweise den Figuren 3A bis 3E dargestellt, wobei jede dieser Figuren einen Teil des kinematischen Bauteils 1 bzw. der Vorrichtung 4 zeigt, in verschiedenen Darstellungen.

Besonders bevorzugt ist es zur kompakteren Ausgestaltung vorgesehen, dass die fünfte Drehachse 40 senkrecht zu der ersten Drehachse 13 und/oder der zweiten Drehachse 14 ist. Mit dem ersten Zahnradelement 11 bzw. mit diesem verbunden ist ein Zahnkranz 41, welcher dazu vorgesehen ist, mit dem vierten Zahnradelement 39 wirkverbunden zu sein, so dass sich Bewegungen des ersten Zahnradelements 11 auf den Zahnkranz 41, abhängig von der Drehrichtung DR1, DR2, übertragen werden können und von dem Zahnkranz 41 an das erste Betätigungselement 9. Ebenso ist es denkbar, dass die fünfte Drehachse 40 und die erste Drehachse 13 nicht senkrecht zueinander ausgebildet sind, sondern in einem spitzen Winkel bzw. stumpfen Winkel, je nach Bezugsachse bzw. Betrachtung, zueinander angeordnet sind.

Bevorzugt ist das vierte Zahnrad 39 derart ausgebildet, dass eine dritte Führungskulisse 42 alternativ zur ersten Führungskulisse 18 vorgesehen ist, in welcher das erste Stiftelement 17 geführt werden kann, so dass das erste Betätigungselement 9 entsprechend bewegt werden kann. Die dritte Führungskulisse 42 ist bevorzugt in sich geschlossen. Bevorzugt kann die dritte Führungskulisse 42 kreisförmig oder oval oder in einer anderen Form ausgebildet sein. Bevorzugt ist die Ausgestaltung der dritten Führungskulisse 42 derart, dass eine Bewegung entlang der Höhenrichtung H gut ausgebildet ist und nachgefolgt werden kann, das heißt, dass das erste Stiftelement 17 in bzw. entlang der Höhenrichtung H bewegt werden kann.

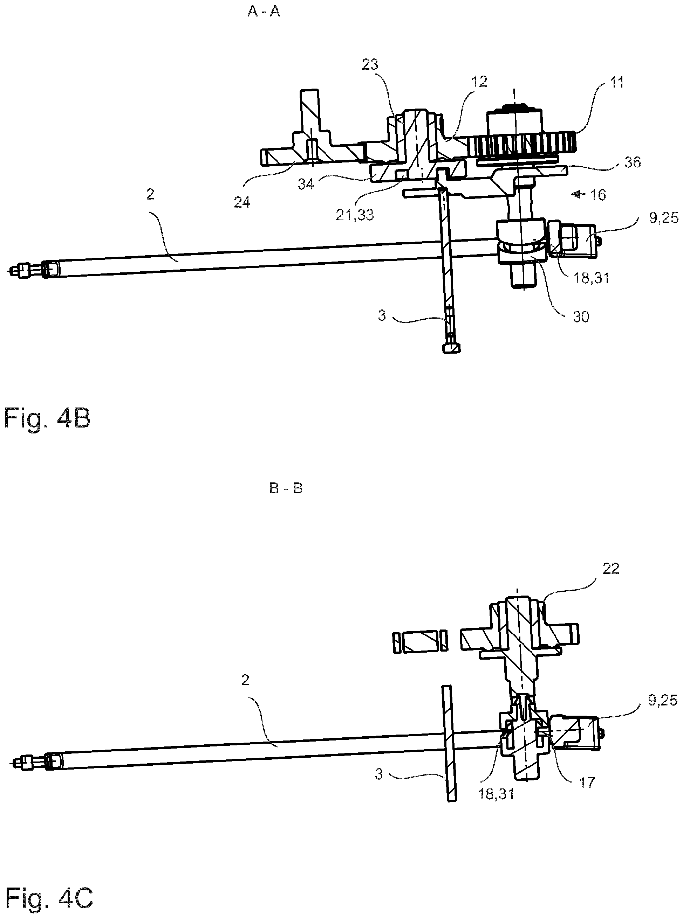

Die Figur 4A zeigt die Figur 1C in einer Draufsicht. Die Figur 4B zeigt den Schnitt A-A, die Figur 4C den Schnitt B-B.

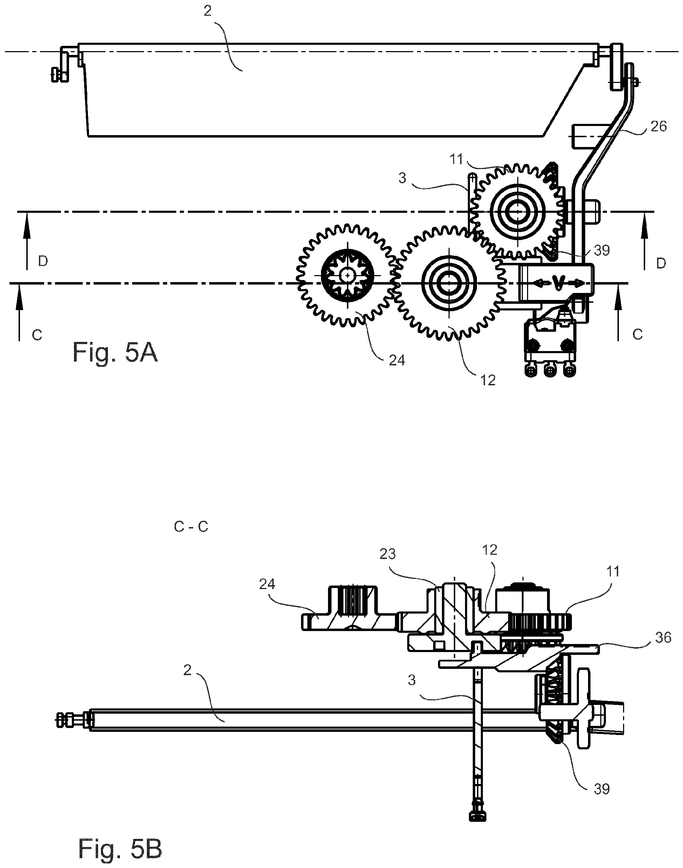

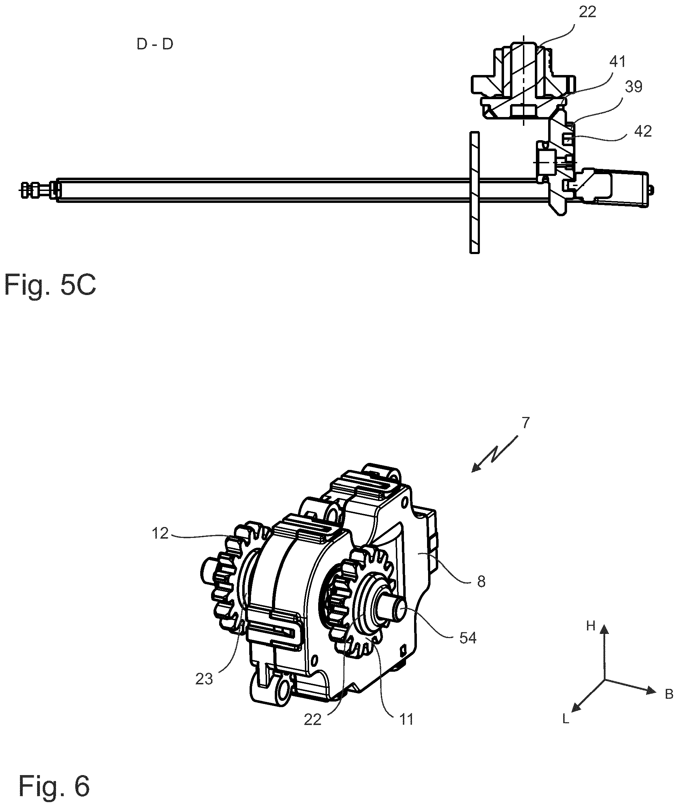

Die Figur 5A zeigt die Figur 3A in einer Draufsicht. Die Figur 5B zeigt den Schnitt C-C, die Figur 5C den Schnitt D-D.

Gemäß der Figur 6 ist eine weitere Ausführungsform einer Antriebseinheit 7 mit einem Aktuator 8 dargestellt. Dabei ist der Aktuator 8 in Breitenrichtung B zwischen dem ersten Zahnrad 11 und dem zweiten Zahnrad 12 angeordnet, wobei die Zahnräder 11, 12 auf einer gemeinsamen Welle 54 angeordnet sind. Weiter sind wiederum Freiläufe 22, 23 vorgesehen, wodurch sich das erste Zahnrad 11 nur in eine Drehrichtung DR1, DR2 und das zweite Zahnrad 12 sich nur in der weiteren Drehrichtung DR1, DR2 dreht.

Alle aufgeführten Merkmale können miteinander in beliebiger Weise kombiniert werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Kinematisches Bauteil
- 2: erstes beweglich einstellbares Bauteil
- 3: zweites beweglich einstellbares Bauteil
- 4: Vorrichtung
- 5: Luftkanal
- 7: Antriebseinheit
- 8: Aktuator, Elektromotor
- 9: erstes Betätigungselement
- 10: zweites Betätigungselement
- 11: erstes Zahnradelement
- 12: zweites Zahnradelement
- 13: erste Drehachse
- 14: zweite Drehachse
- 15: vierte Drehachse
- 16: erstes Verbindungselement
- 17: erstes Stiftelement
- 18: erste Führungskulisse
- 19: zweites Verbindungselement
- 20: zweites Stiftelement
- 21: zweite Führungskulisse
- 22: erstes Freilaufelement
- 23: zweites Freilaufelement
- 24: Antriebszahnradelement
- 25: dritte Drehachse
- 26: Hebelelement
- 27: erstes Ende
- 28: Schlitz-Zapfen-Verbindung
- 29: zweites Ende
- 30: zylinderförmiges Bauteil
- 31: Einkerbung
- 32: erstes Verbindungselement
- 33: Einkerbung
- 34: weiteres zylinderförmiges Bauteil
- 36: Schiebeelement
- 37: Aufnahme
- 39: viertes Zahnradelement
- 40: fünfte Drehachse
- 41: Zahnkranz
- 42: dritte Führungskulisse
- 54: Welle
- DR1: erste Drehrichtung
- DR2: zweite Drehrichtung
- L: Längsrichtung
- B: Breitenrichtung
- H: Höhenrichtung

## Patentansprüche

1. Kinematisches Bauteil (1) mit einem ersten beweglich einstellbaren Bauteil (2), einem zweiten beweglich einstellbaren Bauteil (3) und einer Vorrichtung (4), welche einen drehbaren Aktuator (8) aufweist, wobei die Vorrichtung (4) dazu vorgesehen und ausgebildet ist, eine Drehbewegung des Aktuators (8) an die beweglich einstellbaren Bauteile (2, 3) zu übertragen, wobei in einer ersten Drehrichtung (DR1) des Aktuators (8) das erste beweglich einstellbare Bauteil (2) und in einer zweiten Drehrichtung (DR2) des Aktuators (8), welche der ersten Drehrichtung (DR1) entgegengesetzt ist, das zweite beweglich einstellbare Bauteil (3) einstellbar ist.

2. Kinematisches Bauteil (1) nach Anspruch 1,
**dadurch gekennzeichnet, dass**
der drehbare Aktuator (8) ein Elektromotor (8) ist.

3. Kinematisches Bauteil (1) nach Anspruch 1 oder 2,
**dadurch gekennzeichnet, dass**
die Vorrichtung (4) eine Antriebseinheit (7) umfasst, welche mit einem drehbaren Aktuator (8) einerseits und mit dem ersten beweglich einstellbaren Bauteil (2) und dem zweiten beweglich einstellbaren Bauteil (3) andererseits verbunden ist, wobei die Antriebseinheit (7) mittels des Aktuators (8) betätigt werden kann.

4. Kinematisches Bauteil (1) nach Anspruch 3,
**dadurch gekennzeichnet, dass**
die Vorrichtung (4) ein erstes Betätigungselement (9) und ein zweites Betätigungselement (10) aufweist, wobei das erste Betätigungselement (9) mit der Antriebseinheit (7) und dem ersten beweglich einstellbaren Bauteil (2) und das zweite Betätigungselement (10) mit der Antriebseinheit (7) und dem zweiten beweglich einstellbaren Bauteil (3) verbunden ist.

5. Kinematisches Bauteil (1) nach Anspruch 3 oder 4,
**dadurch gekennzeichnet, dass**
die Antriebseinheit (7) ein erstes Zahnradelement (11) und ein zweites Zahnradelement (12) aufweist, wobei das erste Zahnradelement (11) um eine erste Drehachse (13) und das zweite Zahnradelement (12) um eine zweite Drehachse (14) drehbar sind.

6. Kinematisches Bauteil (1) nach Anspruch 5,
**dadurch gekennzeichnet, dass**
die erste Drehachse (13) und die zweite Drehachse (14) im Wesentlichen parallel zueinander sind.

7. Kinematisches Bauteil (1) nach Anspruch 4,
**dadurch gekennzeichnet, dass**
das erste Betätigungselement (9) drehbar um eine vierte Drehachse (15) ist, wobei ein erstes Verbindungselement (16) vorgesehen ist, welches mit dem ersten Zahnradelement (11) und dem Betätigungselement (9) verbunden ist.

8. Kinematisches Bauteil (1) nach Anspruch 7,
**dadurch gekennzeichnet, dass**
das erste Betätigungselement (8) ein erstes Stiftelement (17) und das erste Verbindungselement (16) eine erste Führungskulisse (18) aufweist, wobei das erste Stiftelement (17) in die erste Führungskulisse (18) eingreift.

9. Kinematisches Bauteil (1) nach Anspruch 7 oder 8,
**dadurch gekennzeichnet, dass**
das erste Verbindungselement (16) mit dem ersten Zahnradelement (11) durch ein erstes Freilaufelement (22) verbunden ist.

10. Kinematisches Bauteil (1) nach Anspruch 4,
**dadurch gekennzeichnet, dass**
das zweite Betätigungselement (10) ein zweites Stiftelement (20) und ein zweites Verbindungselement (19) mit einer zweiten Führungskulisse (21) aufweist, wobei das zweite Stiftelement (20) in die zweite Führungskulisse (21) eingreift.

11. Kinematisches Bauteil (1) nach Anspruch 10,
**dadurch gekennzeichnet, dass**
das zweite Verbindungselement (19) mit dem zweiten Zahnradelement (12) durch ein zweites Freilaufelement (23) verbunden ist.
